# EUROPÄISCHE PATENTANMELDUNG

(11) **EP 4 650 028 A1**
(43) Veröffentlichungstag der Anmeldung: **19.11.2025**
(21) Anmeldenummer: 25175410.7
(22) Anmeldetag: 09.05.2025
(51) Int. Cl.: B01D 45/16

(54) **ABSCHEIDER ZUM ABSCHEIDEN VON AEROSOLPARTIKELN AUS EINEM AEROSOL, VERFAHREN ZUM BETREIBEN EINES ABSCHEIDERS SOWIE FLUIDTECHNISCHE EINRICHTUNG MIT EINEM ABSCHEIDER**

(30) Priorität: 14.05.2024 DE 102024113463
(71) Anmelder: Universität Stuttgart, 70174 Stuttgart (DE)
(72) Erfinder: Mehring, Carsten, 72202 Nagold (DE); Dwars, Gunnar, 70186 Stuttgart (DE)
(74) Vertreter: Gleiss Große Schrell und Partner mbB

(57) **Zusammenfassung**

Die Erfindung betrifft einen Abscheider (1) zum Abscheiden von Aerosolpartikeln aus einem Aerosol, mit einem Abscheidergehäuse (2), in welchem ein einen Aerosoleinlass (3) des Abscheiders (1) mit einem Aerosolauslass (4) des Abscheiders (1) strömungstechnisch verbindender Strömungskanal (5) für das Aerosol vorliegt, mit einem als fluiddurchlässiges Flächengebilde oder als strukturierte Gehäusewand (16) des Abscheidergehäuses (2) ausgestalteten Abscheiderelement (9) und mit einem in dem Strömungskanal (5) angeordneten Leitwerk (10) zur Aufprägung eines Dralls auf das Aerosol. Dabei ist vorgesehen, dass das Leitwerk (10) in axialer Richtung bezüglich einer Längsmittelachse (6) des Strömungskanals (5) zumindest bereichsweise mit dem Abscheiderelement (9) in Überdeckung vorliegt und/oder dass das Abscheiderelement (9) bezüglich der Längsmittelachse (6) zylindrisch ausgestaltet ist. Die Erfindung betrifft weiterhin ein Verfahren zum Betreiben eines Abscheiders (1) zum Abscheiden von Aerosolpartikeln aus einem Aerosol sowie eine fluidtechnische Einrichtung mit einem Abscheider (1).

## Beschreibung

Die Erfindung betrifft einen Abscheider zum Abscheiden von Aerosolpartikeln aus einem Aerosol, mit einem Abscheidergehäuse, in welchem ein einen Aerosoleinlass des Abscheiders mit einem Aerosolauslass des Abscheiders strömungstechnisch verbindender Strömungskanal für das Aerosol vorliegt, mit einem, insbesondere in dem Strömungskanal angeordneten oder den Strömungskanal begrenzenden, als fluiddurchlässiges Flächengebilde oder als strukturierte Gehäusewand des Abscheidergehäuses ausgestalteten Abscheiderelement, und mit einem in dem Strömungskanal angeordneten Leitwerk zur Aufprägung eines Dralls auf das Aerosol. Die Erfindung betrifft weiterhin ein Verfahren zum Betreiben eines Abscheiders sowie eine fluidtechnische Einrichtung mit einem Abscheider.

Aus dem Stand der Technik ist beispielsweise die Druckschrift JP 2018008224 A bekannt. Diese offenbart einen Zyklonabscheider zur Abtrennung von Feststoffen aus einem Prozessfluid, das ein Gemisch aus Gasen und Feststoffen ist, umfassend: einen Körperteil, der eine Wirbelkammer bildet, durch die das Prozessfluid unter Verwirbelung strömt; ein Führungselement, das am Anfang der Wirbelkammer angeordnet ist und das in die Wirbelkammer strömende Prozessfluid in die Richtung der Verwirbelung führt; einen Feststoffauslass, der in dem Körperteil ausgebildet und am Umfang der Wirbelkammer offen ist und der die aus dem Prozessfluid abgetrennten Feststoffe führt; einen Feststoffauslass, der in dem Körperteil ausgebildet ist und am Umfang der Wirbelkammer offen ist, um die von dem Fluid abgetrennten Feststoffe abzuleiten; und ein Sieb, das ausgebildet ist, um das Gas durchzulassen, sowie die Feststoffe von dem Gas trennt und sie zu dem Feststoffausfluss führt. Dabei ist vorgesehen, dass der Zyklonabscheider mit einem Element zum Führen der Feststoffe versehen ist, dessen Außenrand entlang einer Umfangswandfläche eines Endes der Wirbelkammer angeordnet ist, um die von dem Prozessfluid abgeschiedenen Feststoffe zu dem Feststoffauslass zu führen.

Weiterhin beschreibt die Druckschrift DE 10 2020 103 804 A1 ein Impaktor-Abscheiderelement zum Abscheiden von Fluidtröpfchen aus einem Gasstrom mit wenigstens einem in einer Halterung befestigten, als Netzgewebe- oder Gitterelement ausgestalteten Abscheidemittel mit einer Rohseite und einer Reinseite, wobei die Halterung dazu ausgelegt ist, dass Abscheidemittel mit einem flachen Anströmwinkel im Gasstrom zu positionieren. Es wird vorgeschlagen, dass die Halterung dazu ausgelegt ist, das Abscheidemittel derart im Gasstrom zu positionieren, dass das Gas auf der Reinseite des Abscheidemittels frei abströmen kann.

Es ist Aufgabe der Erfindung, einen Abscheider zum Abscheiden von Aerosolpartikeln aus einem Aerosol vorzuschlagen, welcher gegenüber bekannten Abscheidern Vorteile aufweist, insbesondere sich durch einen hohen Abscheidegrad und einen geringen Druckverlust auszeichnet sowie gut skalierbar ist.

Dies wird erfindungsgemäß mit einem Abscheider zum Abscheiden von Aerosolpartikeln aus einem Aerosol mit den Merkmalen des Anspruchs 1 erreicht. Dabei ist vorgesehen, dass das Leitwerk in axialer Richtung bezüglich einer Längsmittelachse des Strömungskanals zumindest bereichsweise mit dem Abscheiderelement in Überdeckung vorliegt und/oder dass das Abscheiderelement bezüglich der Längsmittelachse zylindrisch ausgestaltet ist. Alternativ oder zusätzlich kann es vorgesehen sein, dass das Abscheiderelement als Impaktorabscheiderelement ausgestaltet ist und über Durchtrittsöffnungen für ein Hindurchtreten eines Trägerfluid des Aerosols durch das Ascheideelement verfügt, wobei Abmessungen der Durchtrittsöffnungen größer sind als eine Partikelgröße der aus dem Aerosol abzuscheidenden Aerosolpartikel.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Der Abscheider findet beispielsweise in einer fluidtechnischen Einrichtung Anwendung, kann jedoch selbstverständlich auch separat von dieser vorliegen. Er ist zum Abscheiden von Aerosolpartikeln aus dem Aerosol vorgesehen und ausgestaltet. Unter dem Aerosol ist ein Gemisch aus einem gasförmigen Trägerfluid und den Aerosolpartikeln zu verstehen. Das Aerosol liegt insbesondere als Dispersion beziehungsweise Kolloiddispersion vor. Das Trägerfluid ist in diesem Fall ein gasförmiges Dispersionsmedium. Die Aerosolpartikel sind vorzugsweise flüssig oder fest, liegen also als Flüssigkeitspartikel oder Feststoffpartikel vor. Ein festes Aerosolpartikel kann auch als Aerosolkorn und ein flüssiges Aerosolpartikel als Aerosoltropfen bezeichnet werden.

Die Größe der Aerosolpartikel ist grundsätzlich beliebig, insbesondere ist sie jedoch klein. Beispielsweise beträgt die Partikelgröße höchstens 100 µm, höchstens 10 µm oder höchstens 1 µm. Es kann auch vorgesehen sein, dass die Aerosolpartikel nochmals kleiner sind und ihre Partikelgröße höchstens 400 nm, höchstens 100 nm oder höchstens 40 nm beträgt. Unter der Partikelgröße ist vorzugsweise ein Durchmesser der Aerosolpartikel zu verstehen insbesondere ein Äquivalenzdurchmesser, beispielsweise ein volumenäquivalenter Kugeldurchmesser oder ein oberflächenäquivalenter Kugeldurchmesser.

Angesichts der kontinuierlichen Verschärfung von Emissionsgrenzwerten und den steigenden industriellen Ansprüchen an die Abgasqualität in technischen Prozessen ist die Notwendigkeit nach einer effizienten Reinigung von Aerosolen immens gestiegen. Aerosole haben häufig zum einen ein hohes gesundheitsgefährdendes Potenzial und sind auch in Nutzgasen häufig unerwünscht, zum anderen ist die Betriebsempfindlichkeit technischer Anlagen und Maschinen gegenüber Aerosolen prozessbedingt sehr hoch, sodass durch den Kontakt des Aerosols mit Bauteilen und Komponenten Schäden entstehen können.

Abscheider zum Abscheiden der Aerosolpartikel aus dem Aerosol findet unter anderem Anwendung in der Vakuum- und Kompressorentechnik, in Raumreinigungsanlagen, in Werkzeugmaschinen, beispielsweise in Fräsmaschinen oder Drehmaschinen, in Umweltüberwachung- und Forschungsstationen, in der Luft- und Raumfahrtindustrie, in Kernkraftanlagen, in der chemischen und petrochemischen Industrie, in der Lebensmittelindustrie sowie in Brennstoffzellen. Insbesondere in der Zeit der Covid-19 Pandemie ist zudem die Nachfrage nach effizienten Abscheidern zum Abscheiden von Aerosolpartikeln aus Raumluft stark angestiegen. Durch die Abscheidung von potenziell infektiösen Tröpfchen aus der Raumluft tragen diese Abscheider dazu bei, ein Infektionsrisiko zu minimieren und die Ausbreitung von Krankheitserregern einzudämmen.

Die wichtigsten Parameter bei der Bewertung von Abscheider sind die Abscheideleistung beziehungsweise der Abscheidegrad, der Druckverlust, die Standzeit, das Bauvolumen, der Durchsatz, die Zuverlässigkeit beziehungsweise Robustheit sowie die Skalierfähigkeit. Der im Rahmen dieser Beschreibung dargelegte Abscheider ist hinsichtlich der genannten Parameter gegenüber bekannten Abscheidern im Vorteil.

Das Aerosol, also das Gemisch aus Trägerfluid und Aerosolpartikeln, wird dem Abscheider durch den Aerosoleinlass zugeführt. Es durchläuft den Abscheider, wobei die Aerosolpartikel zumindest teilweise, insbesondere überwiegend, nahezu vollständig oder sogar vollständig aus dem Trägerfluid ausgefiltert werden. Anschließend tritt das nunmehr eine geringere Anzahl an Aerosolpartikeln aufweisende Aerosol, insbesondere lediglich das Trägerfluid, aus dem Aerosolauslass des Abscheiders aus. Die in dem Abscheider abgeschiedenen Aerosolpartikel verbleiben in dem Abscheider oder werden zumindest teilweise aus dem Abscheider herausgeführt, vorzugsweise durch einen Aerosolpartikelauslass, welcher von dem Aerosolauslass verschieden ist. Bei flüssigen Aerosolpartikeln koaleszieren diese nach ihrem Abscheiden am Abscheiderelement und werden gezielt abgeführt, insbesondere durch konstruktive Maßnahmen am Abscheiderelement. Das stromaufwärts des Abscheiders vorliegende Aerosol kann auch als Rohfluid und das stromabwärts des Abscheiders vorliegende Aerosol auch als Reinfluid bezeichnet werden; analog dazu ist der Aerosoleinlass ein Rohfluideinlass und der Aerosolauslass ein Reinfluidauslass.

Der Abscheider verfügt über das Abscheidergehäuse, an beziehungsweise in welchem der Aerosoleinlass und der Aerosolauslass vorliegen. In dem Abscheidergehäuse ist der Strömungskanal hergestellt, welcher den Aerosoleinlass mit dem Aerosolauslass strömungstechnisch verbindet. Der Strömungskanal erstreckt sich insoweit ausgehend von dem Aerosoleinlass bis hin zu dem Aerosolauslass. Das durch den Aerosoleinlass in den Abscheider eintretende Aerosol durchläuft den Strömungskanal bis hin zu dem Aerosolauslass und tritt durch diesen wieder aus dem Abscheider aus.

Der Einfachheit halber wird im Rahmen dieser Beschreibung stets von dem Aerosol gesprochen, auch wenn aus diesem bei seinem Durchströmen des Abscheiders die Aerosolpartikel vollständig ausgeschieden worden sein sollten. Das durch den Aerosolauslass ausströmende Aerosol weist in jedem Fall eine geringere Partikelanzahl beziehungsweise Partikeldichte an Aerosolpartikeln auf als das durch den Aerosoleinlass in den Abscheider einströmende Aerosol. Wird das Aerosol während seines Durchströmens des Abscheiders vollständig von den Aerosolpartikeln befreit, so strömt lediglich das Trägerfluid durch den Aerosolauslass aus dem Abscheider aus. Gleichwohl wird auch dieses Trägerfluid als Aerosol bezeichnet, zumal üblicherweise nicht alle Aerosolpartikel aus dem Aerosol abgeschieden werden können.

Das Abscheiden der Aerosolpartikel in dem Abscheider erfolgt mithilfe zweier unterschiedlicher Wirkmechanismen beziehungsweise mithilfe entsprechender konstruktiver Maßnahmen. Zum einen verfügt der Abscheider über das Abscheiderelement und zum anderen über das Leitwerk. Das Abscheiderelement ist dazu vorgesehen und ausgestaltet, die Aerosolpartikel aus dem Aerosol abzuscheiden und zwischenzuspeichern beziehungsweise über den Partikelauslass separat von dem Aerosol abzugeben. Hierzu ist das Abscheiderelement in einer ersten Variante des Abscheiders als fluiddurchlässiges Flächengebilde, insbesondere als textiles oder poröses Flächengebilde, ausgestaltet und arbeitet insoweit als Filter oder als Impaktorabscheider, welcher von dem Aerosol durchströmt wird, und/oder als Anordnung kleinskaliger Impaktorabscheider, die von dem Aerosol unter Drall angeströmt werden. Beispielsweise sind das Abscheidergehäuse und/oder das Leitwerk zur Realisierung des Impaktorabscheiders so ausgestaltet, dass das Aerosol bei seinem Auftreffen auf das Flächengebilde beziehungsweise seinen Bestandteilen großflächig lokale Staupunktströmungen bewirkt, also zahlreiche beabstandet voneinander auftretende Staupunktströmungen. Gleichzeitig ist die Strömungsgeschwindigkeit des Aerosols abseits des Flächengebildes beziehungsweise der Staupunktströmungen begrenzt, es tritt also keine ausgeprägte Erhöhung der Strömungsgeschwindigkeit auf.

Das Flächengebilde ist hierzu fluiddurchlässig, also zumindest durchlässig für das Trägerfluid, beispielsweise nur durchlässig für das Trägerfluid. Hierunter ist insbesondere zu verstehen, dass das das Flächengebilde dem Trägerfluid einen möglichst geringen Strömungswiderstand entgegensetzt, die Aerosol enthaltenen Aerosolpartikel jedoch zuverlässig von dem Trägerfluid trennt, nämlich durch Filtration und/oder Impaktion, insbesondere jeweils gekoppelt mit dem Einfluss eines Zentrifugalfelds erzeugt durch den Drall des Aerosols. Vorzugsweise ist das Flächengebilde hierzu ein Flächengebilde, insbesondere ein textiles Flächengebilde oder ein poröses Flächengebilde. Unter dem Flächengebilde ist beispielsweise ein Gebilde zu verstehen, welches eine von dem Aerosol angeströmte und/oder überströmte Oberfläche aufweist. Das Flächengebilde weist vorzugsweise Durchtrittsöffnungen auf, welche für ein Durchströmen des Flächengebildes durch das Trägerfluid vorgesehen und ausgestaltet sind. Aufgrund der Durchtrittsöffnungen ist das Flächengebilde also für das Trägerfluid durchlässig.

Die Durchtrittsöffnungen weisen Abmessungen auf, welche derart gewählt sind, dass das gewünschte Funktionsprinzip des Abscheiders umgesetzt ist. Die Abmessungen können auch als Maschenweite oder als Porengröße des Abscheiderelements beziehungsweise des Flächengebildes bezeichnet werden. Arbeitet das Abscheiderelement als Filter, so sind die Abmessungen kleiner als die Partikelgröße der Aerosolpartikel, welche mittels des Abscheiders aus dem Aerosol abgeschieden werden sollen. Beispielsweise betragen die Abmessungen höchstens 90 %, höchstens 70 % oder höchstens 50 % der Partikelgröße, um ein zuverlässiges Abscheiden der Aerosolpartikel aus dem Aerosol zu gewährleisten.

Arbeitet das Abscheiderelement hingegen als Impaktorabscheider, so sind die Abmessungen der Durchtrittsöffnungen größer gewählt. Insbesondere sind die Abmessungen größer als die Partikelgröße der aus dem Aerosol abzuscheidenden Aerosolpartikel. Beispielsweise sind die Abmessungen um mindestens 50 %, mindestens 200 % oder mindestens 500 % größer als die Partikelgröße. Hierdurch ist wird ein besonders geringer Druckverlust des Abscheiderelements erzielt, ohne jedoch die Abscheideleistung beziehungsweise den Abscheidegrad zu verringern.

Unter der Partikelgröße ist beispielsweise eine Nennpartikelgröße zu verstehen, die vorzugsweise einer mittleren Partikelgröße der aus Aerosol abzuscheidenden Aerosolpartikel entspricht. Die Nennpartikelgröße kann auch so gewählt sein, dass statistisch gesehen mindestens 50 %, mindestens 80 % oder mindestens 90 % der Aerosolpartikel eine größere Partikelgröße und/oder höchstens 10 %, höchstens 20 % oder höchstens 40 % eine kleinere Partikelgröße aufweisen.

Bei dem Durchströmen des Abscheiderelements wird zumindest ein Teil der Aerosolpartikel aus dem Aerosol herausgefiltert beziehungsweise abgeschieden und von dem Abscheiderelement aufgenommen. Die abgeschiedenen Aerosolpartikel verbleiben zumindest teilweise und/oder zumindest zeitweise in dem Abscheiderelement. Im Falle von flüssigen Aerosolpartikeln vereinigen sich diese beziehungsweise koaleszieren an oder in dem Abscheiderelement zu einem Flüssigkeitsfilm, welcher an oder in dem Abscheiderelement abgeführt wird, vorzugsweise durch Schwerkrafteinfluss, Kapillarkrafteinfluss oder durch Scherkräfte, insbesondere allein durch den Schwerkrafteinfluss und/oder den Kapillarkrafteinfluss und/oder die Scherkräfte.

In einer zweiten Variante ist das Abscheiderelement ein Teil des Abscheidergehäuses, nämlich eine den Strömungskanal begrenzende Gehäusewand. Zusätzlich oder alternativ ist das Abscheiderelement Teil des Leitwerks, insbesondere einer Leitschaufel des Leitwerks. Die Gehäusewand sowie alternativ oder zusätzlich das Leitwerk weist eine Struktur auf, welche derart ausgestaltet ist, dass sich die Aerosolpartikel in und/oder an ihr ansammeln. Beispielsweise verfügt die Struktur über eine oder mehrere Vertiefungen, insbesondere Rillen beziehungsweise Nuten. Eine Abscheidung der Aerosolpartikel an und/oder in der Struktur wird im Wesentlichen mittels zumindest eines der nachfolgend genannten Mechanismen erzielt: Turbulente Dispersion, Wirbeltransport und Impaktion. In dem Aerosol bildet sich bei seinem Überströmen der Struktur eine Grenzschicht beziehungsweise Scherschicht aus, welche hochturbulent ist. Durch die turbulente Dispersion werden die Aerosolpartikel aus der Scherschicht in die Struktur eingetragen.

Vorzugsweise bilden sich im Bereich der Scherschicht Wirbelstrukturen aus, insbesondere größerskalige Wirbelstrukturen, die die Aerosolpartikel ebenfalls in die Struktur hineinbewegen. In der Struktur, insbesondere in Vertiefungen der Struktur, werden die Aerosolpartikel dann durch turbulente Dispersion oder die Brownsche Bewegung aus dem Aerosol abgeschieden. Die Impaktion tritt insbesondere dann auf, wenn die Grenzstromlinie zwischen der Strömung in der Vertiefung und der Außenströmung einen Staupunkt aufweist. In diesem Fall können Partikel auf der Gehäusewand auftreffen und aus dem Aerosolabgeschieden werden. Unter der Impaktion ist bevorzugt ein Auftreffen der Aerosolpartikel auf die Struktur selbst beziehungsweise die Gehäusewand zu verstehen, in welcher die Struktur hergestellt ist. Durch das Auftreffen werden die Aerosolpartikel aus dem Aerosol abgeschieden und sammeln sich in der Struktur an, die insbesondere an der Gehäusewand und/oder dem Leitwerk vorliegt.

Mittels des Abscheiderelements wird in jedem Fall - unabhängig von der jeweiligen Variante - bereits ein guter Abscheidegrad erreicht. Wesentlich verbessert wird die Abscheidewirkung des Abscheiders mithilfe des Leitwerks. Dieses ist derart ausgestaltet, dass es den Drall auf das Aerosol aufgeprägt, also das Aerosol mit einem Drall beaufschlagt. Hierzu durchströmt das Aerosol das Leitwerk und wird bezüglich der Längsmittelachse des Strömungskanals in eine Drehbewegung, also den Drall, versetzt. Bevorzugt sind das Leitwerk und das Abscheiderelement derart angeordnet, dass das mit dem Drall beaufschlagte Aerosol das Abscheiderelement passiert. Entsprechend ist das Leitwerk zumindest bereichsweise oder vollständig stromaufwärts des Abscheiderelements in dem Strömungskanal platziert. Durch den Drall werden die Aerosolpartikel aufgrund der auf sie wirkenden Zentrifugalkraft in radialer Richtung nach außen gedrängt.

Überraschenderweise hat sich im Rahmen von Forschungsarbeiten der Anmelderin herausgestellt, dass der Abscheidegrad sich durch spezielle Ausgestaltungen des Abscheiders noch verbessern lässt. So wird beispielsweise ein besonders hoher Abscheidegrad erzielt, sofern sich das Leitwerk in den Bereich des Abscheiderelement hinein erstreckt, also in axialer Richtung bezüglich der Längsmittelachse betrachtet in Überdeckung mit diesem vorliegt. Hierdurch wird der Drall des Aerosols auch im Bereich des Abscheiderelement mit hoher Intensität aufrechterhalten, sodass vorzugsweise der Drall im Bereich des Abscheiderelement mit mindestens derselben Intensität vorliegt wie stromaufwärts des Abscheiderelements. Hierdurch werden die Aerosolpartikel zuverlässig aus dem Aerosol ausgetragen, nämlich in radialer Richtung nach außen oder nach innen gedrängt, beispielsweise auf das Abscheiderelement zu oder von dem Abscheiderelement fort, insbesondere entlang von Leitschaufeloberflächen radial nach innen. In jedem Fall wird die besonders vorteilhafte Abscheidewirkung erzielt. Die Abscheidewirkung kann durch eine Reduzierung des Durchströmungsquerschnitts weiter verbessert werden, da diese die Aufrechterhaltung des Dralls sicherstellt.

Zusätzlich oder alternativ ist das Abscheiderelement bezüglich der Längsmittelachse zylindrisch ausgestaltet, weist also eine Zylinderform auf. Alternativ ist das Abscheiderelement bezüglich der Längsmittelachse konisch, weist also eine Kegelform oder Kegelstumpfform auf. Bevorzugt ist das Abscheiderelement in Form eines geraden Zylinders, vorzugsweise eines geraden Kreiszylinders ausgestaltet, weist also über seine Erstreckung in axialer Richtung einen gleichbleibenden kreisförmigen Querschnitt mit gleichbleibenden Abmessungen in radialer Richtung auf. Diese Ausgestaltung des Abscheiderelements stellt insbesondere sicher, bevorzugt zusammen mit einer gezielten Reduzierung des Durchströmungsquerschnitts, dass über die Erstreckung des Abscheiderelements in axialer Richtung hinweg stets eine hinreichend große Oberfläche des Abscheiderelements zum Durchströmen durch das Aerosol bereitgestellt wird, sodass also das Abscheiderelement besonders gleichmäßig mit dem Aerosol beaufschlagt wird. Hierdurch wird eine optimale Abscheidung der Aerosolpartikel gewährleistet und/oder ein lokales Zusetzen des Abscheiderelement mit den Aerosolpartikeln zuverlässig verhindert.

Der beschriebene Abscheider hat den Vorteil, dass er einfach und kostengünstig herstellbar ist. Er zeichnet sich zudem durch einen besonders hohen Abscheidegrad, insbesondere auch für Partikel kleiner als 1 µm beziehungsweise kleiner als 0,5 µm, sowie einen geringen Druckverlust aus. Es ist daher ohne weiteres möglich, den Abscheider im Rahmen der fluidtechnischen Einrichtung strömungstechnisch beliebig anzuordnen und/oder zu verschalten. So kann es beispielsweise vorgesehen sein, mehrere Abscheider, insbesondere identisch ausgestaltete Abscheider, strömungstechnisch parallel oder in Reihe zu schalten, um die gewünschten Eigenschaften der fluidtechnischen Einrichtung zu erzielen. Auch ist der Abscheider in beliebigen Größenordnungen herstellbar; beispielsweise ist eine Ausgestaltung umsetzbar, die in axialer Richtung Abmessungen von höchstens 20 mm, höchstens 15 mm oder höchstens 10 mm aufweist. Vorzugsweise weist der Abscheider beziehungsweise das Abscheidergehäuse ein Verhältnis von Abmessungen in axialer Richtung zu Abmessungen in radialer Richtung von mindestens 2, mindestens 3 oder mindestens 4 bis höchstens 10, höchstens 8 oder höchstens 6 auf.

Eine Weiterbildung der Erfindung sieht vor, dass das Abscheidergehäuse und das Leitwerk einstückig und materialeinheitlich ausgestaltet sind, insbesondere gemeinsam als Spritzgussteil hergestellt sind. Zumindest bestehen das Abscheidergehäuse und das Leitwerk aus dem gleichen Material und/oder sind stoffschlüssig miteinander verbunden. Beispielsweise werden das Abscheidergehäuse und das Leitwerk separat voneinander hergestellt, beispielsweise jeweils als Spritzgussteil, und nachfolgend das Leitwerk in das Abscheidergehäuse eingesetzt und dort befestigt, vorzugsweise stoffschlüssig. Auch eine kraftschlüssige oder formschlüssige Befestigung kann jedoch realisiert sein. Alternativ können das Abscheidergehäuse und das Leitwerk als gemeinsames Spritzgussteil vorliegen, also während eines gemeinsamen Spritzgießvorgangs hergestellt werden. Dies ermöglicht eine besonders kostengünstige Bereitstellung des Abscheiders.

Eine Weiterbildung der Erfindung sieht vor, dass das Leitwerk mindestens eine Leitschaufel aufweist, die bezüglich der Längsmittelachse in einem Drallerzeugungsbereich zumindest bereichsweise schraubenförmig verläuft. Das Leitwerk kann über genau eine Leitschaufel, also eine einzige Leitschaufel verfügen; vorzugsweise umfasst das Leitwerk jedoch mehrere Leitschaufeln, die in axialer Richtung bezüglich der Längsmittelachse gesehen in Überdeckung miteinander angeordnet sind. Die mehreren Leitschaufeln beginnen insoweit bezüglich der Längsmittelachse an unterschiedlichen Umfangspositionen an derselben Axialposition und erstrecken sich ausgehend von dieser schraubenförmig in axialer Richtung.

Sofern im Rahmen dieser Beschreibung von der wenigstens einen Leitschaufel oder der Leitschaufel die Rede ist, so sind die Ausführungen stets äquivalent. Erläuterungen zu der wenigstens einen Leitschaufel sind insoweit auf die Leitschaufel und Ausführungen zu der Leitschaufel auf die wenigstens eine Leitschaufel übertragbar. Liegen mehrere Leitschaufeln vor, so sind die Ausführungen zu der Leitschaufel beziehungsweise der wenigstens einen Leitschaufel auf jede der mehreren Leitschaufeln analog anwendbar.

Die Leitschaufel liegt beispielsweise als Wand einer Helix vor, welche einen oder mehrere von dem Aerosol durchströmte Gänge aufweist, entsprechend einer oder mehreren Leitschaufeln. Die Leitschaufel weist bestimmte Werte von Geometrieparametern auf, beispielsweise einen bestimmten Wert für eine Steigung beziehungsweise Ganghöhe der Leitschaufel und einen bestimmten Wert für einen Gangwinkel der Leitschaufel. Im Falle der mehreren Leitschaufeln sind ihre Geometrieparameter vorzugsweise identisch. Durch die schraubenförmige beziehungsweise helixförmige Ausgestaltung der Leitschaufel in dem Drallerzeugungsbereich des Leitwerks wird dem Aerosol bei seinem Durchströmen des Drallerzeugungsbereichs der Drall aufgeprägt, das Aerosol also in eine Drehbewegung um die Längsmittelachse herum versetzt. Die beschriebene Ausgestaltung ermöglicht die bereits erwähnten Vorteile.

Eine Weiterbildung der Erfindung sieht vor, dass das Leitwerk einen Eintrittsbereich aufweist, in welchem die wenigstens eine Leitschaufel parallel zu der Längsmittelachse verläuft. Der Eintrittsbereich ist vorzugsweise stromaufwärts des Drallerzeugungsbereichs angeordnet, also auf der dem Aerosoleinlass zugewandten Seite des Drallerzeugungsbereichs. Der Eintrittsbereich ist derart beschaffen, dass die Leitschaufel einer Gleichrichtung des Aerosols beziehungsweise einer Ausrichtung des Aerosols in Richtung der Längsmittelachse dient. Hierdurch wird eine Beruhigung des Aerosols und mithin eine reduzierte Turbulenzerzeugung bei einer Umlenkung des Aerosols beziehungsweise - insbesondere gegenüber anderen Ausgestaltungen des Abscheiders - eine Reduzierung von Turbulenzen in dem Aerosol erzielt, sodass sich ein besonders geringer Druckverlust des Abscheiders, insbesondere ein besonders geringer Umlenkdruckverlust, ergibt. Die Leitschaufel ist zwischen dem Eintrittsbereich und dem Drallerzeugungsbereich durchgehend ausgestaltet, die Leitschaufel weist insoweit über den Eintrittsbereich und den Drallerzeugungsbereich hinweg einen kontinuierlichen, ununterbrochenen Verlauf auf. Vorzugsweise ist die Leitschaufel mit einem durchgehend stetigen Verlauf ausgestaltet, sie weist also keine Unstetigkeiten, beispielsweise in Form von Kanten, Knicken oder dergleichen auf. So ergibt sich ein besonders geringer Druckverlust des Abscheiders.

Eine Weiterbildung der Erfindung sieht vor, dass der Aerosoleinlass und der Aerosolauslass konzentrisch angeordnet sind, sodass die Längsmittelachse des Strömungskanals durchgehend gerade verläuft. Beispielsweise sind der Aerosoleinlass und Aerosolauslass in axialer Richtung bezüglich der Längsmittelachse auf gegenüberliegenden Seiten des Abscheidergehäuses angeordnet. In einer ersten Variante sind sowohl der Aerosoleinlass als auch der Aerosolauslass zum Einströmen beziehungsweise Ausströmen des Aerosols in axialer Richtung vorgesehen und ausgestaltet. Es kann in einer zweiten Variante auch vorgesehen sein, dass der Aerosoleinlass zum Einströmen des Aerosols in axialer Richtung und der Aerosolauslass zum Ausströmen des Aerosols in radialer Richtung ausgestaltet ist. In jedem Fall sind bevorzugt der Aerosoleinlass und der Aerosolauslass bezüglich der Längsmittelachse konzentrisch angeordnet, die Längsmittelachse verläuft insoweit bezüglich des Aerosoleinlasses und des Aerosolauslasses jeweils mittig. Dies ermöglicht wiederum die Erzielung des besonders geringen Druckverlusts und des hohen Abscheidegrads.

Eine Weiterbildung der Erfindung sieht vor, dass das Leitwerk eine Leitwerknabe aufweist, von welcher ausgehend sich die wenigstens eine Leitschaufel in radialer Richtung bezüglich der Längsmittelachse nach außen erstreckt. Vorzugsweise ist die Leitwerknabe symmetrisch beziehungsweise konzentrisch bezüglich der Längsmittelachse angeordnet. Sie kann über ihre Erstreckung in axialer Richtung hinweg gleichbleibende Abmessungen in radialer Richtung, also insbesondere einen gleichbleibenden Durchmesser, aufweisen. Es kann jedoch auch vorgesehen sein, dass die Abmessungen der Leitwerknabe in radialer Richtung über ihren Verlauf in axialer Richtung zunehmen oder abnehmen. Die Leitwerknabe begrenzt den Strömungskanal innerhalb des Abscheidergehäuses zumindest bereichsweise in radialer Richtung nach innen.

An der Leitwerknabe ist die Leitschaufel angeordnet, welche sich in radialer Richtung ausgehend von dieser nach außen erstreckt, insbesondere bis zu der Gehäusewand des Abscheidergehäuses, welche den Strömungskanal in radialer Richtung nach außen begrenzt, oder bis zu dem den Strömungskanal begrenzenden Abscheiderelement. Beispielsweise weist die Leitwerknabe in radialer Richtung Abmessungen auf, welche im Längsschnitt bezüglich der Längsmittelachse gesehen mindestens 20 %, mindestens 30 % oder mindestens 40 % von Abmessungen des Strömungskanals in radialer Richtung in einem Bereich betragen, in welchem die Leitwerknabe in axialer Richtung gesehen in ihm vorliegt. Die Abmessungen der Leitwerknabe variieren beispielsweise entlang der Längsachse, vorzugsweise kontinuierlich, insbesondere zur Aufrechterhaltung der Drallintensität. Die Leitwerknabe dient einer gezielten Strömungsführung und ermöglicht wiederum den geringen Druckverlust und die hohe Abscheideleistung des Abscheiders.

Eine Weiterbildung der Erfindung sieht vor, dass der Strömungskanal zumindest bereichsweise von wenigstens zwei der nachfolgend genannten Elemente gemeinsam begrenzt ist: Abscheidergehäuse, Leitwerknabe und Abscheiderelement. Beispielsweise begrenzt das Abscheidergehäuse den Strömungskanal zumindest bereichsweise in radialer Richtung nach außen, wohingegen die Leitwerknabe den Strömungskanal zumindest bereichsweise in radialer Richtung nach innen begrenzt. Das Abscheiderelement begrenzt je nach Ausgestaltung des Abscheiders den Strömungskanal in radialer Richtung entweder nach innen oder nach außen. Zum Beispiel ist es vorgesehen, dass der Strömungskanal in radialer Richtung nach innen von der Leitwerknabe und in radialer Richtung nach außen bereichsweise von dem Abscheidergehäuse und bereichsweise von dem Abscheiderelement begrenzt ist. Es kann jedoch auch vorgesehen sein, dass der Strömungskanal in radialer Richtung nach außen durchgehend von dem Abscheidergehäuse und in radialer Richtung nach innen bereichsweise von der Leitwerknabe und bereichsweise von dem Abscheiderelement begrenzt ist. In jeder der genannten Varianten werden die erwähnten Vorteile erzielt.

Eine Weiterbildung der Erfindung sieht vor, dass ein Durchströmungsquerschnitt des Strömungskanals aus Richtung des Aerosoleinlasses in Richtung des Aerosolauslasses zumindest bereichsweise kleiner wird. Unter dem Durchströmungsquerschnitt ist eine für das Durchströmen mit dem Aerosol zur Verfügung stehende Fläche zu verstehen, die vorzugsweise vollständig in einer senkrecht auf der Längsmittelachse stehenden gedachten Ebene liegt. Beispielsweise ist der Durchströmungsquerschnitt am Aerosoleinlass und/oder abseits des Leitwerks ringförmig oder kreisförmig. Im Bereich der Leitwerknabe ist der Durchströmungsquerschnitt insbesondere ringförmig. Der Durchströmungsquerschnitt verringert sich in Strömungsrichtung des Aerosols zumindest bereichsweise, sein Durchströmungsquerschnittsflächeninhalt wird also kleiner. Beispielsweise verkleinert sich der Durchströmungsquerschnitt ausgehend von dem Aerosoleinlass durchgehend bis hin zu dem Aerosolauslass.

Es kann jedoch auch vorgesehen sein, dass der Durchströmungsquerschnitt ausgehend von dem Aerosoleinlass zunächst konstant einen konstanten Flächeninhalt aufweist, bis er sich schließlich in Richtung des Aerosolauslasses, vorzugsweise bis hin zu dem Aerosolauslass, durchgehend verkleinert, vorzugsweise mit einem gleichbleibenden Gradienten in axialer Richtung und/oder derart, dass die Drallintensität des Aerosols konstant bleibt. Die Verkleinerung des Durchströmungsquerschnitts berücksichtigt, dass bereits ein Teil des Aerosols das Abscheiderelement durchlaufen hat und nicht mehr stromaufwärts des Abscheiderelements vorliegt. Insbesondere verkleinert sich der Durchströmungsquerschnitt derart, dass eine Strömungsgeschwindigkeit des Aerosols bezüglich des Abscheiderelements gleich oder zumindest im Wesentlichen gleichbleibt, sodass eine optimale Anströmung des Abscheiderelements mit dem Aerosol sichergestellt ist. Hierdurch wird der hohe Abscheidegrad des Abscheiderelements und ein geringer Druckverlust durch das Abscheiderelement erzielt.

Eine Weiterbildung der Erfindung sieht vor, dass sich das Abscheiderelement unmittelbar an die Leitwerknabe anschließt und auf seiner der Leitwerknabe zugewandten Seite mit der Leitwerknabe fluchtet. Das Abscheiderelement grenzt insoweit in axialer Richtung gesehen unmittelbar an die Leitwerknabe an. Es bildet hierbei eine Fortsetzung der Leitwerknabe aus und weist hierzu auf seiner der Leitwerknabe zugewandten Seite dieselben Außenabmessungen auf wie die Leitwerknabe. Das bedeutet, dass das Abscheiderelement auf dieser Seite nicht in radialer Richtung über die Leitwerknabe übersteht. Entsprechend ist ein besonders geringer Druckverlust realisiert.

Eine Weiterbildung der Erfindung sieht vor, dass das Abscheiderelement koaxial zu der Längsmittelachse angeordnet ist oder dass das Abscheiderelement gegenüber der Längsmittelachse angewinkelt ist. Bevorzugt durchgreift die Längsmittelachse das Abscheiderelement mittig, sodass eine Längsmittelachse des Abscheiderelements mit der Längsmittelachse des Strömungskanals zusammenfällt. Es kann jedoch auch vorgesehen sein, dass eine angewinkelte Anordnung des Abscheiderelements vorgesehen ist. Bei einer solchen Anordnung ist beispielsweise die Längsmittelachse des Abscheiderelements bezüglich der Längsmittelachse des Strömungskanals angewinkelt, schließt mit dieser also einen Winkel ein, welcher größer als 0° und kleiner als 180° ist. Besonders bevorzugt beträgt der Winkel mindestens 2° und höchstens 30°, mindestens 5° und höchstens 15° oder in etwa oder genau 9°. Vorzugsweise liegen in diesem Fall mehrere Abscheiderelemente in Strömungsrichtung beabstandet voneinander in dem Strömungskanal vor. In jedem Fall werden die für den Abscheider genannten Vorteile erreicht.

Eine Weiterbildung der Erfindung sieht vor, dass das Abscheiderelement in axialer Richtung bezüglich der Längsmittelachse durchgehend gleichbleibende Abmessungen in radialer Richtung aufweist oder sich in die von der Leitwerknabe abgewandte Richtung in radialer Richtung aufweitet oder verengt. Im Falle der durchgehend gleichbleibenden Abmessungen liegt das Abscheiderelement insbesondere als Zylinder, vorzugsweise als gerader Kreiszylinder vor. Es kann jedoch auch vorgesehen sein, dass die Verkleinerung des Durchströmungsquerschnitt mithilfe des Abscheiderelements umgesetzt ist, welches sich hierzu in Strömungsrichtung des Aerosols in radialer Richtung aufweitet, also auf den Aerosolauslass zu. In diesem Fall ist das Abscheiderelement beispielsweise kegelförmig beziehungsweise kegelstumpfförmig ausgestaltet. Auch ein Verengen des Abscheiderelements kann vorgesehen sein. Mit jeder der beschriebenen Ausgestaltungen wird ein Abscheider erzielt, welcher sowohl den hohen Abscheidegrad als auch den geringen Druckverlust aufweist.

Eine Weiterbildung der Erfindung sieht vor, dass das Abscheiderelement in radialer Richtung an dem Leitwerk anliegt, wobei das Abscheiderelement das Leitwerk umgreift oder das Leitwerk das Abscheiderelement umgreift. Das Leitwerk beziehungsweise die Leitschaufel erstreckt sich also in radialer Richtung bis hin zu dem Abscheiderelement, nämlich entweder in radialer Richtung nach außen oder in radialer Richtung nach innen. Bei einer solchen Ausgestaltung liegen das Abscheiderelement und das Leitwerk in axialer Richtung gesehen in Überdeckung vor, sodass der Drall des Aerosols auch im Bereich des Abscheiderelements durchgehend aufrechterhalten wird.

Vorzugsweise sind zusätzlich das Abscheidergehäuse und/oder die Leitwerksnabe in axialer Richtung gesehen in Überdeckung mit dem Abscheideelement angeordnet. Besonders bevorzugt sind das Abscheidergehäuse und/oder die Leitwerknabe dabei derart ausgestaltet, dass eine Verringerung des Durchströmungsquerschnitts und eine hieraus folgende Aufrechterhaltung der Strömungsgeschwindigkeit vorliegt. Hierdurch wird eine besonders zuverlässige Trennung der Aerosolpartikel von dem Aerosol erzielt.

Eine Weiterbildung der Erfindung sieht vor, dass das Abscheiderelement auf seiner dem Leitwerk abgewandten Seite in axialer Richtung und/oder in radialer Richtung an dem Abscheidergehäuse anliegt. Das Abscheiderelement erstreckt sich ausgehend von dem Leitwerk, insbesondere ausgehend von der Leitwerknabe, bis hin zu dem Abscheidergehäuse und liegt dort an ihm an, vorzugsweise fluiddicht. Zusätzlich kann das Abscheiderelement an der Leitwerknabe anliegen. Insbesondere ist das Abscheiderelement einerseits dicht an das Leitwerk und andererseits dicht an das Abscheidergehäuse angebunden, sodass das entlang des Strömungskanals strömende Aerosol vollständig das Abscheiderelement durchströmen muss. Das Anliegen des Abscheiderelements an dem Abscheidergehäuse und/oder an der Leitwerknabe erfolgt in axialer Richtung und/oder in radialer Richtung. In ersterem Fall liegt zwischen dem Abscheiderelement und dem Abscheidergehäuse insbesondere ein Linienkontakt vor, beispielsweise entlang einer Kontaktlinie, die vorzugsweise vollständig in einer gedachten Ebene liegt, die senkrecht auf der Längsmittelachse steht.

In letzterem Fall ist hingegen vorzugsweise ein Flächenkontakt realisiert ist; das Abscheiderelement liegt also in einer Anlagefläche an dem Abscheidergehäuse an. Die Anlagefläche ist vorzugsweise parallel zu der Längsmittelachse ausgerichtet. Es kann auch ein Anliegen sowohl in axialer als auch in radialer Richtung vorgesehen sein, wobei vorzugweise ein Linienkontakt oder ein Flächenkontakt realisiert ist. Die Kontaktlinie oder die Kontaktfläche sind bevorzugt gegenüber der Längsmittelachse oder einer zu dieser parallelen Geraden angewinkelt, schließen mit ihr also einen Winkel ein, der größer als 0° und kleiner als 180° ist. In jedem Fall ist sichergestellt, dass das Aerosol das Abscheiderelement durchströmt und entsprechend ein hoher Abscheidegrad vorliegt.

Eine Weiterbildung der Erfindung sieht vor, dass in dem Abscheidergehäuse ein ringförmiger, insbesondere in Umfangsrichtung durchgehender, Sammelkanal für die Aerosolpartikel hergestellt ist. Eine solche Ausgestaltung ist insbesondere umgesetzt, falls das Abscheiderelement auf seiner dem Leitwerk abgewandten Seite in axialer Richtung an dem Abscheidergehäuse anliegt. In diesem Fall ist der Sammelkanal derart ausgestaltet, dass er die Stelle, an welcher das Abscheiderelement an dem Abscheidergehäuse anliegt, umgreift, sodass entlang des Abscheiderelements abgeführte Aerosolpartikel in den Sammelkanal eintreten, insbesondere infolge von Schwerkrafteinfluss und/oder Kapillarkrafteinfluss und/oder aerodynamischem Scherkrafteinfluss in den Sammelkanal hineingedrängt werden. Der Sammelkanal ist vorzugsweise strömungstechnisch an den Partikelauslass des Abscheiders angeschlossen, sodass in dem Sammelkanal vorliegende Aerosolpartikel in Richtung des Partikelauslasses abgeführt werden, wiederum bevorzugt durch Schwerkrafteinfluss, Kapillarkrafteinfluss und/oder Scherkrafteinfluss. Dies ermöglicht einen effizienten Abtransport der Aerosolpartikel aus dem Abscheider.

Eine Weiterbildung der Erfindung sieht vor, dass das Abscheiderelement vermaschte, überkreuzte oder gestreckte Fadensysteme oder Drahtsysteme aufweist oder aus einem porösen Material besteht. Unter den vermaschten Fadensystemen beziehungsweise Drahtsystemen ist insbesondere ein Gewirk oder ein Gestrick zu verstehen, unter den gekreuzten Fadensystemen beziehungsweise Drahtsystemen ein Gewebe oder ein Geflecht und unter den gestreckten Fadensystemen beziehungsweise Drahtsystemen ein Gelege, sodass eine entsprechende Ausgestaltung des Abscheiderelements vorliegt. Das Abscheiderelement ist insoweit zum Beispiel ein Netzgewebe oder ein Webstoff, aus einem Gewebematerial. Als Gewebematerial wird insbesondere ein Polymer verwendet. Das Abscheiderelement besteht zum Beispiel aus einer Polymerfolie, in welche Öffnungen eingebracht werden. Nach dem Einbringen der Öffnungen wird die Polymerfolie verformt, insbesondere durch Dehnen in einer Richtung oder durch unterschiedliches Dehnen in unterschiedlichen Richtungen.

Die Fadensysteme und der Vliesstoff bestehen grundsätzlich aus einer Mehrzahl einzelner Fäden beziehungsweise Fasern oder Drähten, welche im Falle der Fadensysteme mit einer definierten Geometrie miteinander verbunden sind. Die Drähte sind insbesondere aus Metall, beispielsweise aus Edelstahl. Alternativ besteht das Abscheiderelement aus dem porösen Material, insbesondere aus einem mikroporösen Material, einem mesoporösen Material oder einem makroporösen Material. Vorzugsweise ist der Porendurchmesser von Poren des porösen Materials für eine Trägheitsabscheidung der Aerosolpartikel gewählt. Der Porendurchmesser beträgt zum Beispiel mindestens 20 µm und höchstens 200 µm. Das poröse Material ist beispielsweise derart gewählt, dass die Aerosolpartikel nicht durch seine Poren hindurch gelangen können, vorzugsweise aufgrund einer Impaktionsabscheidung, sondern sich an oder in dem porösen Material ansammeln. Dies ermöglicht den hohen Abscheidegrad und den niedrigen Druckverlust.

Eine Weiterbildung der Erfindung sieht vor, dass das Abscheiderelement aus unterschiedlichen Materialien besteht, insbesondere sich aus Fäden und/oder Drähten aus unterschiedlichen Materialien zusammensetzt. Das Abscheiderelement ist insoweit nicht homogen aus einem einzigen Material hergestellt, sondern es finden mehrere unterschiedliche Materialien Anwendung. Beispielsweise unterscheiden sich die Materialien in ihrem Effekt auf die Aerosolpartikel, beispielsweise ist eines der Materialien hydrophil und ein anderes der Materialien hydrophob. Eine solche Ausgestaltung des Abscheiderelements ist insbesondere im Falle des Flächengebildes einfach umsetzbar, nämlich indem dessen Fäden aus den unterschiedlichen Materialien bestehen. Beispielsweise sind Kettfäden und Schussfäden des, zum Beispiel durch Weben hergestellten, Abscheiderelements beziehungsweise entsprechende Drähte aus den unterschiedlichen Materialien realisiert, insbesondere sind die Kettfäden beziehungsweise die entsprechenden Drähte hydrophil und die Schussfäden beziehungsweise die entsprechenden Drähte hydrophob oder umgekehrt. Mit einer solchen Ausgestaltung können die Aerosolpartikel besonders effizient aus dem Abscheider abgeführt werden.

Eine Weiterbildung der Erfindung sieht vor, dass die Längsmittelachse des Strömungskanals in einem bestimmungsgemäßen Betrieb des Abscheiders parallel oder zunächst im Wesentlichen parallel zu einem Schwerkraftvektor ausgerichtet ist. Hierunter ist zu verstehen, dass das Aerosol den Abscheider bestimmungsgemäß von oben nach unten durchströmt, sodass die Aerosolpartikel, insbesondere die an dem Abscheiderelement abgeschiedenen Aerosolpartikel, von dem auf sie wirkenden Schwerkrafteinfluss in den Abscheider hineingedrängt und/oder in den Sammelkanal überführt werden. Auch dies dient dem Erreichen des hohen Abscheidegrads.

Die Erfindung betrifft weiterhin ein Verfahren zum Betreiben eines Abscheiders zum Abscheiden von Aerosolpartikeln aus einem Aerosol, insbesondere einem Abscheider gemäß den Ausführungen im Rahmen dieser Beschreibung, wobei der Abscheider über ein Abscheidergehäuse, in welchem ein einen Aerosoleinlass des Abscheiders mit einem Aerosolauslass des Abscheiders strömungstechnisch verbindender Strömungskanal für das Aerosol vorliegt, über ein, insbesondere in dem Strömungskanal angeordnetes oder den Strömungskanal begrenzendes, als fluiddurchlässiges Flächengebilde oder als strukturierte Gehäusewand des Abscheidergehäuses ausgestaltetes Abscheiderelement, und über ein in dem Strömungskanal angeordnetes Leitwerk verfügt, mittels welchem ein Drall auf das Aerosol aufgeprägt wird. Dabei ist vorgesehen, dass das Leitwerk in axialer Richtung bezüglich einer Längsmittelachse des Strömungskanals zumindest bereichsweise mit dem Abscheiderelement in Überdeckung vorliegt und/oder dass das Abscheiderelement bezüglich der Längsmittelachse zylindrisch ausgestaltet ist.

Auf eine derartige Vorgehensweise beziehungsweise eine derartige Ausgestaltung des Abscheiders wurde bereits hingewiesen. Sowohl der Abscheider als auch das Verfahren zu seinem Betreiben können gemäß den Ausführungen im Rahmen dieser Beschreibung weitergebildet sein, sodass insoweit auf diese verwiesen wird.

Eine Weiterbildung der Erfindung sieht vor, dass als Aerosol ein Gas-Flüssigkeits-Gemisch verwendet wird. Es wurde bereits erläutert, dass sich das Aerosol aus dem Trägerfluid und den Aerosolpartikeln zusammensetzt. Das Trägerfluid ist vorzugsweise gasförmig, wohingegen die Aerosolpartikel bevorzugt flüssig sind. Für eine derartige Zusammensetzung des Aerosols erreicht der beschriebene Abscheider einen besonders hohen Abscheidegrad.

Die Erfindung betrifft zudem eine fluidtechnische Einrichtung mit einem Abscheider zum Abscheiden von Aerosolpartikeln aus einem Aerosol, insbesondere einem Abscheider gemäß den Ausführungen dieser Beschreibung, wobei der Abscheider über ein Abscheidergehäuse, in welchem ein einen Aerosoleinlass des Abscheiders mit einem Aerosolauslass des Abscheiders strömungstechnisch verbindender Strömungskanal für das Aerosol vorliegt, über ein, insbesondere in dem Strömungskanal angeordnetes oder den Strömungskanal begrenzendes, als fluiddurchlässiges Flächengebilde oder als strukturierte Gehäusewand des Abscheidergehäuses ausgestaltetes Abscheiderelement, und über ein in dem Strömungskanal angeordnetes Leitwerk zur Aufprägung eines Dralls auf das Aerosol verfügt. Dabei ist vorgesehen, dass das Leitwerk in axialer Richtung bezüglich einer Längsmittelachse des Strömungskanals zumindest bereichsweise mit dem Abscheiderelement in Überdeckung vorliegt und/oder dass das Abscheiderelement bezüglich der Längsmittelachse zylindrisch ausgestaltet ist.

Erneut wird hinsichtlich der Vorteile und möglicher vorteilhafter Weiterbildungen der fluidtechnischen Einrichtung und des Abscheiders auf die Erläuterungen in dieser Beschreibung verwiesen.

Eine Weiterbildung der Erfindung sieht vor, dass zusätzlich zu dem Abscheider wenigstens ein weiterer Abscheider vorliegt, der mit dem Abscheider strömungstechnisch parallel oder in Reihe geschaltet ist. Insgesamt verfügt die fluidtechnische Einrichtung also über mehrere Abscheider, nämlich den Abscheider und den wenigstens einen weiteren Abscheider. Die mehreren Abscheider sind strömungstechnisch parallel oder in Reihe geschaltet, um einen gewünschten Durchsatz und/oder einen gewünschten Abscheidegrad beziehungsweise Gesamtabscheidegrad zu erzielen. Hierdurch wird eine besonders hohe Flexibilität hinsichtlich des Einsatzes der Abscheider erreicht. Die mehreren Abscheider sind beispielsweise identisch ausgestaltet, weisen also identische strömungstechnische Eigenschaften auf. Auch eine unterschiedliche Ausgestaltung der Abscheider kann jedoch vorgesehen sein. Bevorzugt sind strömungstechnisch parallel geschaltete der Abscheider identisch und/oder strömungstechnisch in Reihe geschaltete der Abscheider verschieden ausgestaltet. Insbesondere sind die in Reihe geschalteten Abscheider für die Abscheidung unterschiedlicher Größenklassen von Aerosolpartikeln vorgesehen und ausgestaltet. Insbesondere ist hierbei wenigstens ein stromaufwärts liegender der Abscheider für das Abscheiden von größeren Aerosolpartikeln vorgesehen und ausgestaltet als wenigstens ein stromabwärts liegender der Abscheider.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer ersten Ausführungsform eines Abscheiders zum Abscheiden von Aerosolpartikeln aus einem Aerosol,
- Figur 2: eine schematische Darstellung eines Leitwerks des Abscheiders in einer ersten Variante,
- Figur 3: eine schematische Darstellung des Leitwerks in einer zweiten Variante,
- Figur 4: eine schematische Darstellung des Abscheiders in einer zweiten Ausführungsform,
- Figur 5: eine schematische Darstellung des Abscheiders in einer dritten Ausführungsform,
- Figur 6: eine schematische Darstellung des Abscheiders in einer vierten Ausführungsform, sowie
- Figur 7: eine schematische Darstellung des Abscheiders in einer fünften Ausführungsform.

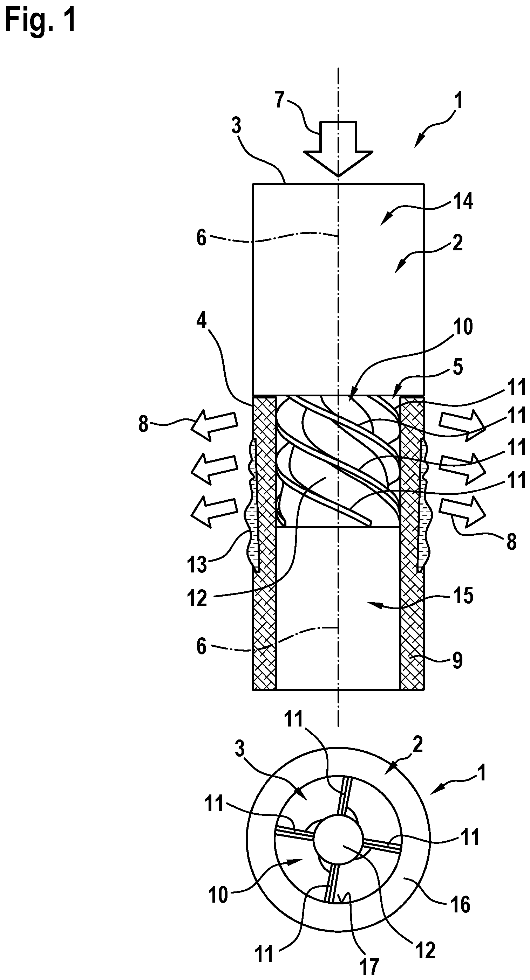

Die Figur 1 zeigt in oben eine schematische und teilweise geschnittene Seitendarstellung eines Abscheiders 1, wie er beispielsweise im Rahmen einer fluidtechnischen Einrichtung zum Einsatz kommt. Der Abscheider 1 dient zum Abscheiden von Aerosolpartikeln aus einem Aerosol. Er verfügt über ein Abscheidergehäuse 2, an welchem ein Aerosoleinlass 3 sowie ein Aerosolauslass 4 ausgestaltet sind. In dem Abscheidergehäuse 2 liegt zudem ein Strömungskanal 5 vor, welcher den Aerosoleinlass 3 mit dem Aerosolauslass 4 strömungstechnisch verbindet.

Dem Abscheider 1 wird das Aerosol durch den Aerosoleinlass 3 in axialer Richtung bezüglich einer Längsmittelachse 6 des Strömungskanals 5 gemäß dem Pfeil 7 zugeführt. Das Aerosol durchströmt das Abscheidergehäuse 2 durch den Strömungskanal 5 und tritt anschließend durch den Aerosolauslass 4 gemäß der Pfeile 8 aus. In dem dargestellten Ausführungsbeispiel ist der Abscheider 1 für ein Einströmen des Aerosols in axialer Richtung bezüglich der Längsmittelachse 6 sowie für ein Ausströmen des Aerosols in radialer Richtung bezüglich der Längsmittelachse 6 vorgesehen und ausgestaltet, also zumindest mit einer radialen Geschwindigkeitskomponente.

Zum Abscheiden der Aerosolpartikel aus dem Aerosol ist in dem Strömungskanal 5 ein Abscheiderelement 9 angeordnet, welches in dem gezeigten Ausführungsbeispiel als textiles Flächengebilde oder Netzgewebe hergestellt ist. Es umgreift die Längsmittelachse 6 in Umfangsrichtung vollständig und durchgehend und ist insoweit kreiszylindrisch ausgestaltet, insbesondere liegt es in Gestalt eines geraden Kreiszylinders vor. Weiterhin ist in dem Strömungskanal 5 ein Leitwerk 10 angeordnet, welches über wenigstens eine Leitschaufel 11 verfügt, in dem gezeigten Ausführungsbeispiel über vier Leitschaufeln 11, welche eine Leitwerknabe 12 des Leitwerks 10 schraubenförmig umgreift beziehungsweise umgreifen.

Soweit im Rahmen dieser Beschreibung lediglich auf eine der Leitschaufeln 11 eingegangen wird, so sind die Ausführungen analog auf jede der Leitschaufeln 11 übertragbar. Die Leitschaufel 11 umgreift die Längsmittelachse 6 beispielsweise um mindestens 180°, vorzugsweise um mindestens 270° oder um mindestens 360°. Die mehreren Leitschaufeln 11 beginnen und enden jeweils an der gleichen Axialposition in axialer Richtung, sind jedoch in Umfangsrichtung gegeneinander versetzt, insbesondere gleichmäßig verteilt angeordnet. Im Falle der vier Leitschaufeln 11 bedeutet dies, dass die Leitschaufel um 90° gegeneinander versetzt angeordnet sind, sodass vier Strömungskanäle durch das Leitwerk 10 vorliegen.

Es ist zu erkennen, dass ein Durchmesser der Leitwerknabe 12 in axialer Richtung zunimmt, nämlich aus Richtung des Aerosoleinlasses 3. Hierdurch verringert sich ein Durchströmungsquerschnitt des Strömungskanals 5 in axialer Richtung. Dies stellt sicher, dass das Aerosol den Strömungskanal 5 über den gesamten Verlauf des Strömungskanals 5 hinweg mit im Wesentlichen gleichbleibender mittlerer Strömungsgeschwindigkeit durchströmt, da das Aerosol, insbesondere ein Trägerfluid des Aerosols, durch das den Strömungskanal 5 in radialer Richtung nach außen begrenzende Abscheiderelement 9 aus dem Strömungskanal 5 in Richtung des Aerosolauslasses 4 entweicht, insbesondere teilweise.

Im gezeigten Fall grenzt das Abscheiderelement 9 unmittelbar an den Aerosolauslass 4 an beziehungsweise erstreckt sich bis in den Aerosolauslass 4 hinein. Anders ausgedrückt erstreckt sich das Abscheiderelement 9 über den gesamten Aerosolauslass 4 hinweg. Zusätzlich kann sich das Abscheiderelement 9 über ein Ende des Aerosolauslasses 4 hinaus erstrecken, beispielsweise bis zu einem Ende des Abscheiders 1. Insbesondere weist das Abscheiderelement 9 hierbei eine Erstreckung in axialer Richtung bezüglich der Längsmittelachse 6 auf, die mindestens 150 %, mindestens 200 % oder mindestens 250 % der Erstreckung des Aerosolauslasses 4 in derselben Richtung beträgt. Beispielsweise weist das Abscheidergehäuse 2 ein erstes Gehäuseteil 14 und ein zweites Gehäuseteil 15 auf. Es kann vorgesehen sein, dass das Leitwerk 10 und das zweite Gehäuseteil 15 als Einsetzteil ausgestaltet sind, welches in das erste Gehäuseteil 14 eingesetzt ist, sodass die beiden Gehäuseteile 14 und 15 gemeinsam das Abscheidergehäuse 2 bilden. In dem gezeigten Ausführungsbeispiel ist der Aerosolauslass 4 in axialer Richtung gesehen zwischen den beiden Gehäuseteilen 14 und 15 hergestellt und/oder der Aerosolauslass 4 erstreckt sich in axialer Richtung gesehen von einem Ende des ersten Gehäuseteils 14 bis hin zu einem Ende des zweiten Gehäuseteils 15.

In dem vorgestellten Ausführungsbeispiel stehen das Leitwerk 10 beziehungsweise seine Leitschaufel 11 in Überdeckung mit dem Abscheiderelement 9. Entsprechend wird der Strömungskanal 5 in radialer Richtung nach innen von der Leitwerknabe 12 und in radialer Richtung nach außen zumindest bereichsweise von dem Abscheiderelement 9 begrenzt. Das Leitwerk 10 ist derart ausgestaltet, dass das entlang des Strömungskanals 5 strömende Aerosol mit einem Drall beaufschlagt wird, das Aerosol also in eine Drehbewegung versetzt wird. Hierdurch werden die Aerosolpartikel aufgrund der auf sie wirkenden Zentrifugalkraft auf einer Spiralbahn nach außen gedrängt und mithin in das Abscheiderelement 9 hinein. Die aus dem Aerosol abgeschiedenen Aerosolpartikel sammeln sich an beziehungsweise in dem Abscheiderelement 9 an. Liegen sie in flüssiger Form vor, so bilden sie gemeinsam einen Flüssigkeitsfilm 13 aus, der durch Schwerkrafteinfluss und/oder Kapillarkrafteinfluss und/oder durch die Wirkung aerodynamischer Kräfte abgeführt wird.

Ebenfalls dargestellt ist unten eine Draufsicht des Abscheiders 1, also eine Ansicht von außerhalb des Abscheidergehäuses 2 in Richtung des Aerosoleinlasses 3. Deutlich zu erkennen ist das Leitwerk 10 mit der Leitwerknabe 12 und den Leitwerkschaufeln 11. Es wird zudem deutlich, dass das Abscheidergehäuse 2 eine Gehäusewand 16 mit einer Innenumfangsfläche 17 aufweist, wobei die Gehäusewand 16 mit derselben Wandstärke oder zumindest in etwa derselben Wandstärke dargestellt ist wie das Abscheiderelement 9. Vorzugsweise ist jedoch die Wandstärke des Abscheiderelements 9 geringer als die Wandstärke der Gehäusewand 16. Beispielsweise beträgt die Wandstärke des Abscheiderelements 9 höchstens 40 %, höchstens 20 % oder höchstens 10 % der Wandstärke der Gehäusewand 16. Das Abscheiderelement 9 und die Gehäusewand 16 sind vorzugweise derart beschaffen, dass die Innenumfangsfläche 17, welche von der Gehäusewand 16 gebildet ist und die den Strömungskanal 5 in radialer Richtung nach außen begrenzt mit einer Innenumfangsfläche des Abscheiderelements 9 fluchtet, sodass ein geringer Strömungswiderstand des Abscheiders 1 gewährleistet ist.

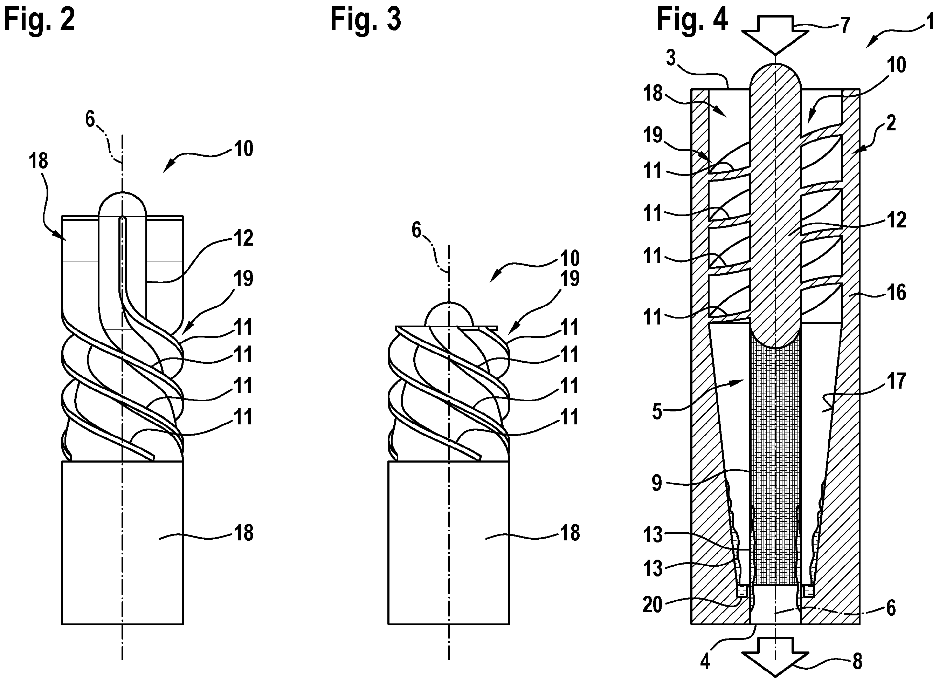

Die Figur 2 zeigt eine schematische Darstellung einer ersten Variante des Leitwerks 10. Eine Längsmittelachse des Leitwerks 10 entspricht der Längsmittelachse 6 des Strömungskanals 5, sodass diese hier dargestellt ist. Gemäß der ersten Variante verfügt das Leitwerk 10 über einen Eintrittsbereich 18, in welchem die Leitschaufel 11 parallel zu der Längsmittelachse 6 verläuft. Entsprechend wird das durch den Strömungskanal 5 strömende Aerosol in dem Eintrittsbereich 18 des Leitwerks 10 in axialer Richtung geführt. An den Eintrittsbereich 18 schließt sich in Strömungsrichtung des Aerosols ein Drallerzeugungsbereich 19 an, in welchem die Leitschaufel 11 auf die bereits beschriebene Art und Weise schraubenförmig verläuft, sodass der Drall auf das Aerosol aufgeprägt wird. In dem Eintrittsbereich 18 weist die Leitwerknabe 12 einen gleichbleibenden Querschnitt auf, insbesondere ist also ein Durchmesser der Leitwerknabe 12 über den Eintrittsbereich 18 hinweg konstant. In dem Drallerzeugungsbereich 19 weitet sich die Leitwerknabe 12 auf die bereits beschriebene Art und Weise auf, sodass der Durchströmungsquerschnitt des Strömungskanals 5 kleiner wird.

Die Figur 3 zeigt eine schematische Darstellung einer zweiten Variante des Leitwerks 10. Diese ähnelt grundsätzlich der ersten Variante, sodass auf die entsprechenden Ausführungen verwiesen und nachfolgend lediglich auf die Unterschiede eingegangen wird. Diese liegen darin, dass der Eintrittsbereich 18 entfällt und entsprechend lediglich der Drallerzeugungsbereich 19 vorliegt. In jeder seiner Varianten kann das Leitwerk 10 als Einsetzteil ausgestaltet sein, welches in das Gehäuseteil 14 des Abscheidergehäuses 2 eingesetzt und dort befestigt wird.

Die Figur 4 zeigt eine schematische Darstellung einer zweiten Ausführungsform des Abscheiders 1. Um Wiederholungen zu vermeiden, wird auf die Erläuterungen zu der ersten Ausführungsform Bezug genommen und nachfolgend lediglich auf die Unterschiede eingegangen. Diese liegen darin, dass der Strömungskanal 5 nun in radialer Richtung nach außen von dem Abscheidergehäuse 2 beziehungsweise der Gehäusewand 16 begrenzt ist und in radialer Richtung nach innen bereichsweise von der Leitwerknabe 12 und bereichsweise von dem Abscheiderelement 9. Das Abscheiderelement 9 liegt hierbei als gedachte Verlängerung der Leitwerknabe 12 vor, ein Außenumfang des Abscheiderelements 9 fluchtet insoweit auf seiner der Leitwerknabe 12 zugewandten Seite mit einem Außenumfang der Leitwerknabe 12. Der Aerosolauslass 4 ist an einen Innenraum des Abscheiderelements 9 strömungstechnisch angeschlossen, sodass das Aerosol bei seinem Durchströmen des Strömungskanals 5 das Abscheiderelement 9 in radialer Richtung von außen nach innen durchströmt.

Das Abscheiderelement 9 liegt auf seiner der Leitwerknabe 12 abgewandten Seite in axialer Richtung an dem Abscheidergehäuse 2 an, nämlich über einen Linienkontakt. In dem Bereich, in welchem das Abscheiderelement 9 an dem Abscheidergehäuse 2 anliegt, ist ein Sammelkanal 20 hergestellt, in welchem sich der Flüssigkeitsfilm 13 auf die dargestellte Art und Weise sammelt. Der Sammelkanal 20 ist an einen Partikelauslass des Abscheiders 1 angeschlossen, über welchen die Aerosolpartikel abseits des Aerosolauslasses 4 aus dem Abscheider 1 beziehungsweise dem Abscheidergehäuse 2 herausgeführt werden. Die Verkleinerung des Durchströmungsquerschnitts des Strömungskanals 5 wird bei der vorliegenden zylindrischen Ausgestaltung des Abscheiderelements 9 durch eine entsprechende Ausgestaltung des Abscheidergehäuses 2 erzielt. Hierzu ist die Gehäusewand 16 auf ihrer Innenseite beziehungsweise mit ihrer Innenumfangsfläche 17 gegenüber der Längsmittelachse 6 geneigt.

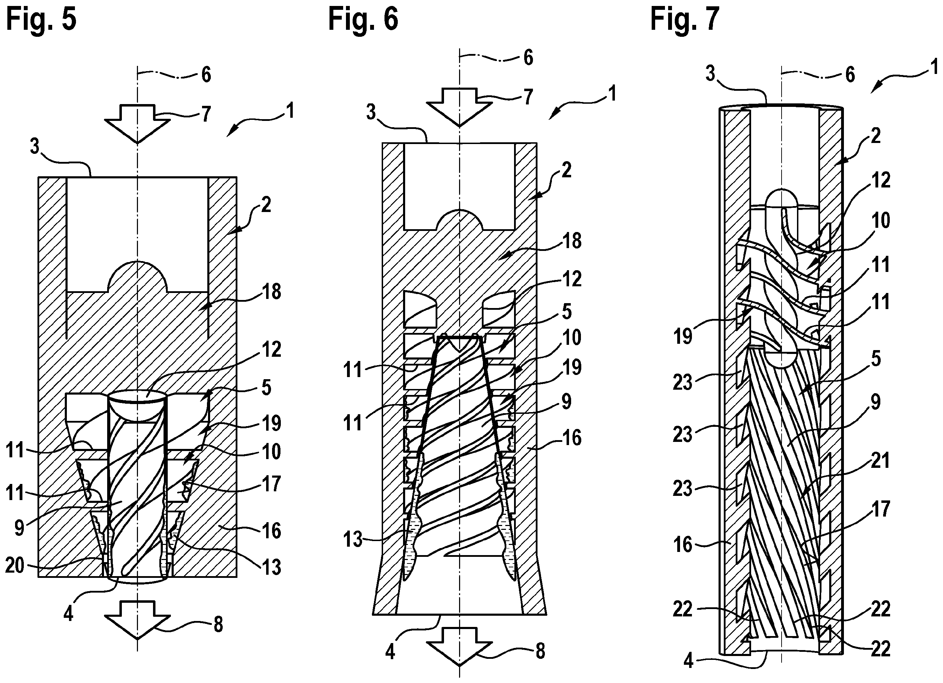

Die Figur 5 zeigt eine schematische Darstellung einer dritten Ausführungsform des Abscheiders 1. Es wird auf die Ausführungen zu der zweiten Ausführungsform Bezug genommen und nachfolgend lediglich auf die Unterschiede hingewiesen. Diese liegen darin, dass die Leitschaufeln 11 in axialer Richtung gesehen in Überdeckung mit dem Abscheiderelement 9 vorliegen, sodass das Aerosol vorzugsweise auch bei seinem Umströmen des Abscheiderelements 9 den Drall aufrecht erhält. Zusätzlich oder alternativ kann es vorgesehen sein, dass die Leitschaufeln 11 in axialer Richtung gesehen im Bereich der gegenüber der Längsmittelachse 6 geringsten Innenumfangsfläche 17 vorliegen. Es ist zu erkennen, dass die Leitschaufel 11 sich ausgehend von dem Abscheidergehäuse 2 beziehungsweise der Gehäusewand 16 in radialer Richtung nach innen bis hin zu dem zylindrischen Abscheiderelement 9 erstreckt und an diesem anliegt. Der Sammelkanal 20 ist beispielweise von einem porösen Material gebildet, das den Flüssigkeitsfilm 13 an der Gehäusewand 16 und dem Abscheiderelement 9 über Kapillarkräfte abtransportiert, insbesondere im Bereich des Aerosolauslasses 4.

Beispielsweise ist es vorgesehen, dass sich - im Längsschnitt beziehungsweise in axialer Richtung gesehen - der Eintrittsbereich 18 bis hin zu dem Abscheiderelement 9 erstreckt und der Drallerzeugungsbereich 19 erst in axialer Richtung in Überdeckung mit dem Abscheiderelement 9 beginnt. Bevorzugt erstreckt sich der Drallerzeugungsbereich 19 in axialer Richtung bis hin zu einer dem Aerosolauslass 4 zugewandten Ende des Abscheiderelements 9, sodass der Drallerzeugungsbereich 19 bevorzugt über die gesamte Erstreckung des Abscheiderelements 9 in axialer Richtung vorliegt.

Die Figur 6 zeigt eine schematische Darstellung einer vierten Ausführungsform des Abscheiders 1. Zu dieser wird auf die Ausführungen zu der dritten Ausführungsform verwiesen und nachfolgend auf die Unterschiede eingegangen. Diese liegen im Wesentlichen darin, dass das Abscheiderelement 9 sich in Durchströmungsrichtung des Aerosols, also aus Richtung des Aerosoleinlasses 3 in Richtung des Aerosolauslasses 4, aufweitet. Die Verkleinerung der Durchströmungsquerschnittsfläche des Strömungskanals 5 zur Aufrechterhaltung des Dralls bei gleichzeitigem Aerosolabfluss durch das Abscheiderelement 9 wird insoweit nicht mittels des Abscheidergehäuses 2 erzielt, sondern durch eine entsprechende Ausgestaltung des Abscheiderelements 9. Die Innenumfangsfläche 17 der Gehäusewand 16 verläuft weitgehend parallel zu der Längsmittelachse 6. Ab einer Axialposition, an welcher das Abscheiderelement 9 an dem Abscheidergehäuse 2 anliegt, weitet sich das Abscheidergehäuse 2 vorzugsweise auf, nämlich derart, dass das Abscheiderelement 9 mit seinem dem Aerosoleinlass 3 abgewandten Ende in radialer Richtung nach außen flächig an dem Abscheidergehäuse 2 beziehungsweise seiner Gehäusewand 16 anliegt. Hierdurch wird eine besonders zuverlässige Abdichtung zwischen Abscheiderelement 9 und Abscheidergehäuse 2 erzielt. Ohne einen in die Gehäusewand integrierten Sammelkanal 20 kann der Flüssigkeitsfilm 13 über den Aerosolauslass 4 austreten. Die beim Aufbrechen des sich bildenden freien Flüssigkeitsfilms entstehenden größeren Tropfen können dann gravimetrisch abgeschieden werden.

Die Figur 7 zeigt eine schematische Darstellung einer fünften Ausführungsform des Abscheiders 1. Zu dieser wird erneut im Grundsatz auf die vorstehenden Ausführungen verwiesen und nachfolgend lediglich auf die Unterschiede eingegangen. Diese liegen darin, dass das Abscheiderelement 9 nicht als Flächengebilde vorliegt, sondern von der Gehäusewand 16 gebildet ist. Hierzu weist die Gehäusewand 16, insbesondere die auf der Innenumfangsfläche 17 der Gehäusewand 16, eine Strukturierung 21 auf, welche sich beispielsweise aus einer Mehrzahl von schraubenförmig verlaufenden Vertiefungen 22 zusammensetzt, von welchen hier lediglich einige beispielhaft angedeutet sind. Die Vertiefungen 22 gehen beispielsweise von Kammern 23 aus, die ebenfalls in der Gehäusewand 16 hergestellt sind, oder werden von den Kammern 23 gebildet.

Vorzugsweise liegt die Strukturierung 21 in axialer Richtung gesehen zumindest bereichsweise, bevorzugt nur bereichsweise, in Überdeckung mit dem Drallerzeugungsbereich 19 des Leitwerks 10 vor. Vorzugsweise übergreift die Strukturierung 21 in axialer Richtung den Drallerzeugungsbereich 19 des Leitwerks 10 und liegt zusätzlich stromabwärts des Drallerzeugungsbereichs 19 vor. Es kann auch vorgesehen sein, dass sich das Leitwerk 10 beziehungsweise sein Drallerzeugungsbereich 19 durch den gesamten Strömungskanal 5 hindurch erstreckt, also bis hin zu dem Aerosolauslass 4 beziehungsweise bis nahezu hin zu dem Aerosolauslass 4. Zusätzlich oder alternativ kann die Strukturierung 21 auch an dem Leitwerk 10, insbesondere an den Leitschaufeln 11 des Leitwerks 10, vorliegen.

Bei der beschriebenen Ausgestaltung der Strukturierung 21 bewirkt insbesondere im Falle von sehr kleinen Aerosolpartikeln die Brownsche Diffusion und die Turbulenz des Aerosols, dass die Aerosolpartikel in die Kammern 23 hinein gedrängt beziehungsweise getragen und in diesen gehalten beziehungsweise abgeschieden werden. Aus den Kammern 23 werden die Aerosolpartikel anschließend aus dem Abscheider 1 abgeführt, vorzugsweise in Form des Flüssigkeitsfilms 13, insbesondere durch beziehungsweise über den bereits erwähnten Partikelauslass und/oder den Sammelkanal 20. Die Auswahl und die Ausrichtung der Vertiefungen 22 und/oder der Kammern 23 zu einem wandnahen Strömungsfeld bestimmt dabei den Abscheidegrad und den Druckverlust über den Abscheider 1 hinweg.

Die beschriebene Ausgestaltung des Abscheiders 1 kombiniert die Verwendung des Abscheiderelements 9 mit der des Leitwerks 10. Zudem liegt die Kombination der genannten Elemente in spezifischer Gestalt vor, für welche die Anmelderin im Rahmen ihrer Forschungsarbeiten überraschenderweise eine deutliche Leistungssteigerung hinsichtlich des Abscheidegrads, insbesondere bezogen auf den Druckverlust, festgestellt hat.

### BEZUGSZEICHENLISTE

- 1: Abscheider
- 2: Abscheidergehäuse
- 3: Aerosoleinlass
- 4: Aerosolauslass
- 5: Strömungskanal
- 6: Längsmittelachse
- 7: Pfeil
- 8: Pfeil
- 9: Abscheiderelement
- 10: Leitwerk
- 11: Leitschaufel
- 12: Leitwerknabe
- 13: Flüssigkeitsfilm
- 14: 1. Gehäuseteil
- 15: 2. Gehäuseteil
- 16: Gehäusewand
- 17: Innenumfangsfläche
- 18: Eintrittsbereich
- 19: Drallerzeugungsbereich
- 20: Sammelkanal
- 21: Strukturierung
- 22: Vertiefung
- 23: Kammer

## Patentansprüche

1. Abscheider (1) zum Abscheiden von Aerosolpartikeln aus einem Aerosol, mit einem Abscheidergehäuse (2), in welchem ein einen Aerosoleinlass (3) des Abscheiders (1) mit einem Aerosolauslass (4) des Abscheiders (1) strömungstechnisch verbindender Strömungskanal (5) für das Aerosol vorliegt, mit einem als fluiddurchlässiges Flächengebilde oder als strukturierte Gehäusewand (16) des Abscheidergehäuses (2) ausgestalteten Abscheiderelement (9) und mit einem in dem Strömungskanal (5) angeordneten Leitwerk (10) zur Aufprägung eines Dralls auf das Aerosol, **dadurch gekennzeichnet, dass** das Leitwerk (10) in axialer Richtung bezüglich einer Längsmittelachse (6) des Strömungskanals (5) zumindest bereichsweise mit dem Abscheiderelement (9) in Überdeckung vorliegt und/oder dass das Abscheiderelement (9) bezüglich der Längsmittelachse (6) zylindrisch ausgestaltet ist.

2. Abscheider nach Anspruch 1, **dadurch gekennzeichnet, dass** das Leitwerk (10) wenigstens eine Leitschaufel (11) aufweist, die bezüglich der Längsmittelachse (6) in einem Drallerzeugungsbereich (19) zumindest bereichsweise schraubenförmig verläuft.

3. Abscheider nach einem der vorhergehenden Ansprüche, **dadurch gekennzeichnet, dass** das Leitwerk (10) einen Eintrittsbereich (18) aufweist, in welchem die wenigstens eine Leitschaufel (11) parallel zu der Längsmittelachse (6) verläuft.

4. Abscheider nach einem der vorhergehenden Ansprüche, **dadurch gekennzeichnet, dass** der Aerosoleinlass (3) und der Aerosolauslass (4) konzentrisch angeordnet sind, sodass die Längsmittelachse (6) des Strömungskanals (5) durchgehend gerade verläuft.

5. Abscheider nach einem der vorhergehenden Ansprüche, **dadurch gekennzeichnet, dass** das Leitwerk (10) eine Leitwerknabe (12) aufweist, von welcher ausgehend sich die wenigstens eine Leitschaufel (11) in radialer Richtung bezüglich der Längsmittelachse (6) nach außen erstreckt.

6. Abscheider nach einem der vorhergehenden Ansprüche, **dadurch gekennzeichnet, dass** der Strömungskanal (5) zumindest bereichsweise von wenigstens zwei der nachfolgend genannten Elementen gemeinsam begrenzt ist: Abscheidergehäuse (2), Leitwerknabe (12) und Abscheiderelement (9).

7. Abscheider nach einem der vorhergehenden Ansprüche, **dadurch gekennzeichnet, dass** ein Durchströmungsquerschnitt des Strömungskanals (5) aus Richtung des Aerosoleinlasses (3) in Richtung des Aerosolauslasses (4) zumindest bereichsweise kleiner wird.

8. Abscheider nach einem der vorhergehenden Ansprüche, **dadurch gekennzeichnet, dass** sich das Abscheiderelement (9) unmittelbar an die Leitwerknabe (12) anschließt und auf seiner der Leitwerknabe (12) zugewandten Seite mit der Leitwerknabe (12) fluchtet.

9. Abscheider nach einem der vorhergehenden Ansprüche, **dadurch gekennzeichnet, dass** das Abscheiderelement (9) koaxial zu der Längsmittelachse (6) angeordnet ist oder dass das Abscheiderelement (9) gegenüber der Längsmittelachse (6) angewinkelt ist.

10. Abscheider nach einem der vorhergehenden Ansprüche, **dadurch gekennzeichnet, dass** das Abscheiderelement (9) in axialer Richtung bezüglich der Längsmittelachse (6) durchgehend gleichbleibende Abmessungen in radialer Richtung aufweist oder sich in die von der Leitwerknabe (12) abgewandte Richtung in radialer Richtung aufweitet oder verengt.

11. Abscheider nach einem der vorhergehenden Ansprüche, **dadurch gekennzeichnet, dass** das Abscheiderelement (9) in radialer Richtung an dem Leitwerk (10) anliegt, wobei das Abscheiderelement (9) das Leitwerk (10) umgreift oder das Leitwerk (10) das Abscheiderelement (9) umgreift.

12. Abscheider nach einem der vorhergehenden Ansprüche, **dadurch gekennzeichnet, dass** das Abscheiderelement (9) auf seiner dem Leitwerk (10) abgewandten Seite in axialer Richtung und/oder in radialer Richtung an dem Abscheidergehäuse (2) anliegt.

13. Abscheider nach einem der vorhergehenden Ansprüche, **dadurch gekennzeichnet, dass** das Abscheiderelement (9) vermaschte, überkreuzte oder gestreckte Fadensysteme oder Drahtsysteme aufweist oder aus einem porösen Material besteht.

14. Verfahren zum Betreiben eines Abscheiders (1) zum Abscheiden von Aerosolpartikeln aus einem Aerosol, insbesondere eines Abscheiders (1) nach einem oder mehreren der vorhergehenden Ansprüche, wobei der Abscheider (1) über ein Abscheidergehäuse (2), in welchem ein einen Aerosoleinlass (3) des Abscheiders (1) mit einem Aerosolauslass (4) des Abscheiders (1) strömungstechnisch verbindender Strömungskanal (5) für das Aerosol vorliegt, über ein als fluiddurchlässiges Flächengebilde oder als strukturierte Gehäusewand (16) des Abscheidergehäuses (2) ausgestaltetes Abscheiderelement (9) und über ein in dem Strömungskanal (5) angeordnetes Leitwerk (10) verfügt, mittels welchem ein Drall auf das Aerosol aufgeprägt wird, **dadurch gekennzeichnet, dass** das Leitwerk (10) in axialer Richtung bezüglich einer Längsmittelachse (6) des Strömungskanals (5) zumindest bereichsweise mit dem Abscheiderelement (9) in Überdeckung vorliegt und/oder dass das Abscheiderelement (9) bezüglich der Längsmittelachse (6) zylindrisch ausgestaltet ist.

15. Fluidtechnische Einrichtung mit einem Abscheider (1) zum Abscheiden von Aerosolpartikeln aus einem Aerosol, insbesondere einem Abscheider (1) nach einem oder mehreren der Ansprüche 1 bis 13, wobei der Abscheider (1) über ein Abscheidergehäuse (2), in welchem ein einen Aerosoleinlass (3) des Abscheiders (1) mit einem Aerosolauslass (4) des Abscheiders (1) strömungstechnisch verbindender Strömungskanal (5) für das Aerosol vorliegt, über ein als fluiddurchlässiges Flächengebilde oder als strukturierte Gehäusewand (16) des Abscheidergehäuses (2) ausgestaltetes Abscheiderelement (9) und über ein in dem Strömungskanal (5) angeordnetes Leitwerk (10) zur Aufprägung eines Dralls auf das Aerosol verfügt, **dadurch gekennzeichnet, dass** das Leitwerk (10) in axialer Richtung bezüglich einer Längsmittelachse (6) des Strömungskanals (5) zumindest bereichsweise mit dem Abscheiderelement (9) in Überdeckung vorliegt und/oder dass das Abscheiderelement (9) bezüglich der Längsmittelachse (6) zylindrisch ausgestaltet ist.
